# EUROPEAN PATENT APPLICATION

(11) **EP 4 648 387 A1**
(43) Date of publication of application: **12.11.2025**
(21) Application number: 24825165.4
(22) Date of filing: 07.06.2024
(51) Int. Cl.: H04L 67/10

(54) **END-CLOUD COLLABORATIVE WORK METHOD, AND RELATED APPARATUS AND COMMUNICATION SYSTEM**

(30) Priority: 21.06.2023 CN 202310748635
(71) Applicant: Huawei Technologies Co., Ltd., Shenzhen, Guangdong 518129 (CN)
(72) Inventor: LI, Shijun, Shenzhen, Guangdong 518129 (CN)
(74) Representative: Gill Jennings & Every LLP
(86) International application number: PCT/CN2024/098273
(87) International publication number: WO 2024/260269

(57) **Abstract**

This application discloses a device-cloud collaborative working method, a related apparatus, and a communication system. A device-side device and a cloud-side device collaboratively process a service, to collaboratively meet a service requirement of a user. In this solution, a part or all of services are migrated to a cloud, so that stronger and higher-quality services can be provided, computing power and energy consumption of the device-side device can be reduced, a battery life of the device-side device can be prolonged, and better device use experience can be provided for a user.

## Description

This application claims priority to Chinese Patent Application No. 202310748635.9, filed with the China National Intellectual Property Administration on June 21, 2023 and entitled "DEVICE-CLOUD COLLABORATIVE WORKING METHOD, RELATED APPARATUS, AND COMMUNICATION SYSTEM", which is incorporated herein by reference in its entirety.

### TECHNICAL FIELD

This application relates to the field terminals and the field of cloud computing, and in particular, to a device-cloud collaborative working method, a related apparatus, and a communication system.

### BACKGROUND

With continuous improvement of computing power of a chip, an electronic device like a mobile phone can provide a user with better use experience, for example, smoother, higher-quality, and more diverse animation effect, and richer colors. However, the improvement of the computing power mainly depends on iterative upgrade of a manufacturing process. As Moore's Law slows down, an improvement speed of device-side computing power is also decelerating. In addition, there is still competition between a legacy process N and an advanced process N+2 in the chip field. However, users are always pursuing better user experience. How to meet a user requirement under limited or determined device-side computing power is a direction worth studying.

### SUMMARY

This application provides a device-cloud collaborative working method, a related apparatus, and a communication system, to provide a high-quality service for a user, reduce computing power and energy consumption of a device-side device, and prolong a battery life of the device-side device.

According to a first aspect, a communication system is provided. The communication system includes a first device and a first node. The first device is configured to: start a first application, and send first data to the first node, where the first data includes control data and/or first service data of the first application. The first node is configured to: allocate a first runtime to the first device, start the first application by using the first runtime, receive the first data by using the first application, generate second data based on the first data by using the first application, and return the second data to the first device by using the first application, where the second data includes second service data of the first application. The first device is further configured to provide a service based on the second data.

According to the communication system provided in the first aspect, a device-side device migrates a part or all of services to a cloud-side node, and the cloud-side node allocates a dedicated runtime to the device-side device to execute the part or all of services. In this way, stronger and higher-quality services can be provided for a user, computing power and energy consumption of the device-side device can be reduced, a battery life of the device-side device can be prolonged, and better device use experience can be provided for the user.

With reference to the first aspect, in some implementations, the first device is further configured to send a first notification message to the first node after the first application is started, where the first notification message includes an identifier of the first application. The first node is specifically configured to start the first application by using the first runtime after receiving the first notification message. In this way, the node on the cloud side starts the first application in advance, and when the device-side device has a collaboration requirement in a process of running the first application, the node on the cloud side can quickly respond to the requirement of the device-side device by using the started first application.

With reference to the first aspect, in some implementations, the control data includes a search instruction, and the second service data includes a result found by the first node according to the search instruction; or
the first service data includes an original image photographed by the first device, and the second service data includes an image obtained after the first node processes the original image; or
the control data includes a game operation instruction of a user, and the second service data includes a game picture rendered by the first node according to the game operation instruction.

With reference to the first aspect, in some implementations, the communication system further includes a second device. The second device is configured to: start a second application, and send third data to the first node, where the third data includes control data and/or third service data of the second application. The first node is further configured to: allocate a second runtime to the second device, start the second application by using the second runtime, receive the third data by using the second application, generate fourth data based on the third data, and return the fourth data to the second device, where the fourth data includes fourth service data of the second application, and the second runtime is different from the first runtime. The second device is further configured to provide a service based on the fourth data. In other words, a same cloud-side node may provide a collaborative service for a plurality of device-side devices, to improve device use experience of a plurality of users.

With reference to the first aspect, in some implementations, the communication system further includes a vendor cloud server. The first device is further configured to log in to the vendor cloud server before starting the first application. The vendor cloud server is configured to allocate the first node in a plurality of nodes to the first device.

In some implementations, the first node meets any one of the following:
in the plurality of nodes, the first node is closest to the first device;
the plurality of nodes include nodes deployed in an access network, and in the nodes deployed in the access network, the first node is closest to the first device;
the plurality of nodes do not include a node deployed in an access network, but include nodes deployed in a bearer network, and in the nodes deployed in the bearer network, the first node is closest to the first device;
the plurality of nodes include neither a node deployed in an access network nor a node deployed in a bearer network, but include nodes deployed in a centralized manner, and in the nodes deployed in the centralized manner, the first node is closest to the first device; or
a distance between the first node and the first device falls within a first value.

In some implementations, the communication system further includes a second node. The vendor cloud server is further configured to allocate the second node in the plurality of nodes to the first device after a location of the first device is moved. The second node is configured to allocate a third runtime to the first device. The first node is further configured to release the first runtime allocated to the first device. After the location of the device-side device is moved, a cloud computing node is reallocated, so that the collaborative service can be provided for the device-side device. In addition, an initial cloud computing node releases a resource allocated to the device-side device, so that resources in the initial cloud computing node can be saved, and a waste of resources can be avoided.

With reference to the first aspect, in some implementations, after the location of the first device is moved, a distance between the first device and the second node is less than the distance between the first device and the first node. This is equivalent to allocating a cloud computing node closer to the device-side device to the device-side device, so that the collaborative service can be provided for the device-side device.

With reference to the first aspect, in some implementations, the first node is further configured to: after allocating the first runtime to the first device, install, in the first runtime, a part or all of applications installed in the first device, where the part or all of applications include the first application.

With reference to the first aspect, in some implementations, the applications installed in the first device includes an application installed in the first runtime of the first node. In some implementations, more applications may be installed in the first device than applications installed in the first runtime of the first node.

With reference to the first aspect, in some implementations, the communication system further includes a cloud server that provides a service for the first application. The first node is specifically configured to: after receiving the first data by using the first application and before returning the second data to the first device, communicate with the cloud server by using the first application running in the first runtime, to generate the second data based on the first data. In other words, the service provided by the device-side device further needs to be supported by the cloud server on a network side.

With reference to the foregoing implementation, in some implementations, the cloud server is further configured to periodically send a heartbeat message to the first node, where the heartbeat message is used to maintain a communication connection between the cloud server and the first node. In this way, the cloud computing node is responsible for a heartbeat connection to the cloud server, and heartbeat connections to the terminal side are reduced, so that service experience is not affected, power on the terminal side can be saved, and air interface resource occupation can be reduced.

With reference to the first aspect, in some implementations, the first runtime includes any one or more of the following: a basic environment for running application program code, and a runtime library.

With reference to the first aspect, in some implementations, the first application in the first device and the first application in the first node include different processing logic.

With reference to the first aspect, in some implementations, the first device includes a fourth runtime, and the first device is specifically configured to start the first application by using the fourth runtime.

According to a second aspect, a device-cloud collaborative working method is provided, and is applied to a first device. The method may include: sending identifiers of a part or all of installed applications to a first node, where the part or all of applications include a first application, and the identifiers of the part or all of applications are used by the first node to install the part or all of applications in a first runtime allocated to the first device; starting the first application; sending first data to the first node, where the first data includes control data and/or first service data of the first application; receiving second data returned by the first node, where the second data is generated by the first node based on the first data by using the first application running on the first node, and the second data includes second service data of the first application; and providing a service based on the second data.

With reference to the second aspect, in some implementations, after starting the first application, the method further includes: sending a first notification message to the first node, where the first notification message includes an identifier of the first application, and the identifier of the first application is used by the first node to start the first application by using the first runtime.

With reference to the second aspect, in some implementations, the control data includes a search instruction, and the second service data includes a result found by the first node according to the search instruction; or
the first service data includes an original image photographed by the first device, and the second service data includes an image obtained after the first node processes the original image; or
the control data includes a game operation instruction of a user, and the second service data includes a game picture rendered by the first node according to the game operation instruction.

With reference to the second aspect, in some implementations, before starting the first application, the method further includes: logging in to a vendor cloud server; and receiving allocation information sent by the vendor cloud server, where the allocation information indicates to allocate the first node to the first device.

In some implementations, the first node meets any one of the following:
in the plurality of nodes, the first node is closest to the first device;
the plurality of nodes include nodes deployed in an access network, and in the nodes deployed in the access network, the first node is closest to the first device;
the plurality of nodes do not include a node deployed in an access network, but include nodes deployed in a bearer network, and in the nodes deployed in the bearer network, the first node is closest to the first device;
the plurality of nodes include neither a node deployed in an access network nor a node deployed in a bearer network, but include nodes deployed in a centralized manner, and in the nodes deployed in the centralized manner, the first node is closest to the first device; or
a distance between the first node and the first device falls within a first value.

In some implementations, the method further includes: after a location is moved, receiving new allocation information sent by the vendor cloud server, where the new allocation information indicates to allocate a second node to the first device.

In some implementations, after the location of the first device is moved, a distance between the first device and the second node is less than the distance between the first device and the first node.

With reference to the second aspect, in some implementations, the second data is specifically generated after the first node communicates with a cloud server by using the first application running on the first runtime, and the cloud server is configured to provide a service for the first application.

With reference to the second aspect, in some implementations, the applications installed in the first device includes an application installed in the first runtime of the first node.

With reference to the second aspect, in some implementations, the first runtime includes any one or more of the following: a basic environment for running application program code, and a runtime library.

With reference to the second aspect, in some implementations, the first application in the first device and the first application in the first node include different processing logic.

With reference to the second aspect, in some implementations, the first device includes a fourth runtime, and the first device is specifically configured to start the first application by using the fourth runtime.

According to a third aspect, a device-cloud collaborative working method is provided, and is applied to a first node. The method may include: allocating first runtime to a first device; starting a first application by using the first runtime; receiving, by using the first application, first data sent by the first device, where the first data includes control data and/or first service data of the first application in the first device; generating second data based on the first data by using the first application, where the second data includes second service data of the first application; and returning the second data to the first device by using the first application.

With reference to the third aspect, in some implementations, before starting the first application by using the first runtime, the method further includes: receiving a first notification message sent by the first node after the first application is started, where the first notification message includes an identifier of the first application.

With reference to the third aspect, in some implementations, the method further includes: allocating a second runtime to a second device, where the second runtime is different from the first runtime; starting the second application by using the second runtime; receiving, by using the second application, third data sent by the second device, where the third data includes control data and/or third service data of the second application in the second device; generating fourth data based on the third data, where the fourth data includes fourth service data of the second application; and returning the fourth data to the second device.

With reference to the third aspect, in some implementations, before allocating the first runtime to the first device, the method further includes: receiving allocation information sent by a vendor cloud server, where the allocation information indicates to allocate the first node to the first device.

In some implementations, the first node meets any one of the following:
in the plurality of nodes, the first node is closest to the first device;
the plurality of nodes include nodes deployed in an access network, and in the nodes deployed in the access network, the first node is closest to the first device;
the plurality of nodes do not include a node deployed in an access network, but include nodes deployed in a bearer network, and in the nodes deployed in the bearer network, the first node is closest to the first device;
the plurality of nodes include neither a node deployed in an access network nor a node deployed in a bearer network, but include nodes deployed in a centralized manner, and in the nodes deployed in the centralized manner, the first node is closest to the first device; or
a distance between the first node and the first device falls within a first value.

With reference to the third aspect, in some implementations, the method further includes: receiving a second notification message sent by the vendor cloud server, where the second notification message indicates the first device to release the first runtime allocated to the first device, and the second notification message is sent by the vendor cloud server after the vendor cloud server learns that a location of the first device is moved; and releasing the first runtime allocated to the first device.

With reference to the third aspect, in some implementations, after allocating the first runtime to the first device, the method further includes: installing, in the first runtime, a part or all of applications installed in the first device, where the part or all of applications include the first application.

With reference to the third aspect, in some implementations, the method further includes: communicating with a cloud server by using the first application running in the first runtime, to generate the second data based on the first data, where the cloud server is configured to provide a service for the first application.

In some implementations, the method further includes: periodically receiving a heartbeat message sent by the cloud server, where the heartbeat message is used to maintain a communication connection between the cloud server and the first node.

With reference to the third aspect, in some implementations, the first runtime includes any one or more of the following: a basic environment for running application program code, and a runtime library.

With reference to the third aspect, in some implementations, the first application in the first node and the first application in the first device include different processing logic.

According to a fourth aspect, a device-cloud collaborative working method is provided, and is applied to a communication system including a first device and a first node. The method may include: The first device starts a first application, and sends first data to the first node, where the first data includes control data and/or first service data of the first application; and the first node allocates a first runtime to the first device, starts the first application by using the first runtime, receives the first data by using the first application, generates second data based on the first data by using the first application, and returns the second data to the first device by using the first application, where the second data includes second service data of the first application, and the first device provides a service based on the second data.

For optional implementations of the fourth aspect, refer to the second aspect and the optional implementations of the second aspect. Details are not described herein again.

According to a fifth aspect, an electronic device is provided, including a memory and one or more processors. The memory is coupled to the one or more processors, the memory is configured to store computer program code, the computer program code includes computer instructions, and the one or more processors invoke the computer instructions, to enable the electronic device to perform the method performed by the electronic device in the second aspect or any one of the implementations of the second aspect.

According to a sixth aspect, an electronic device is provided, including a memory and one or more processors. The memory is coupled to the one or more processors, the memory is configured to store computer program code, the computer program code includes computer instructions, and the one or more processors invoke the computer instructions, to enable the electronic device to perform the method performed by the electronic device in the third aspect or any one of the implementations of the third aspect.

According to a seventh aspect, an embodiment of this application provides a computer-readable storage medium, including instructions. When the instructions are run on an electronic device, the electronic device is enabled to perform the method performed by the electronic device in the second aspect or any one of the implementations of the second aspect.

According to an eighth aspect, an embodiment of this application provides a computer-readable storage medium, including instructions. When the instructions are run on an electronic device, the electronic device is enabled to perform the method performed by the electronic device in the third aspect or any one of the implementations of the third aspect.

According to a ninth aspect, an embodiment of this application provides a computer program product. When the computer program product runs on a computer, the computer is enabled to perform the method performed by the electronic device in the second aspect or any one of the implementations of the second aspect.

According to a tenth aspect, an embodiment of this application provides a computer program product. When the computer program product runs on a computer, the computer is enabled to perform the method performed by the electronic device in the third aspect or any one of the implementations of the third aspect.

According to an eleventh aspect, an embodiment of this application provides a chip system. The chip system includes at least one processor, configured to implement the method performed by the electronic device in the second aspect or any one of the implementations of the second aspect.

According to a twelfth aspect, an embodiment of this application provides a chip system. The chip system includes at least one processor, configured to implement the method performed by the electronic device in the third aspect or any one of the implementations of the third aspect.

### BRIEF DESCRIPTION OF DRAWINGS

FIG. 1 is a diagram of a structure of a communication system 10 according to an embodiment of this application;
FIG. 2 is a schematic flowchart of a device-cloud collaborative working method according to an embodiment of this application;
FIG. 3 is a diagram of runtime installation in a plurality of devices according to an embodiment of this application;
FIG. 4 is an image comparison diagram according to an embodiment of this application;
FIG. 5 is a block diagram of a hardware structure of a device-side device 100 according to an embodiment of this application;
FIG. 6 shows a software architecture of a device-side device 100 according to an embodiment of this application;
FIG. 7 is a block diagram of a hardware structure of a cloud computing node 200 according to an embodiment of this application; and
FIG. 8 is a block diagram of a hardware structure of a vendor cloud server 400 according to an embodiment of this application.

### DESCRIPTION OF EMBODIMENTS

The technical solutions according to embodiments of this application are clearly and completely described in the following with reference to the accompanying drawings. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of' means two or more.

The terms "first" and "second" mentioned below are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java, an extensible markup language (extensible markup language, XML), JS (JavaScript), TS/eTS (Type Script/enhance Type Script), or C/C++. Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

A device-cloud combination processing service is a solution that can well meet user service requirements. For example, a cloud-device collaboration service platform 2 separately connected to a cloud server 1 and a user terminal 3 may be disposed, and the cloud-device collaboration service platform 2 has strong computing, analysis, and processing capabilities. The cloud-device collaboration service platform 2 can monitor the user terminal 3 in real time. If a user operation exceeds a processing capability of the user terminal 3, for example, a large amount of computing or graphics rendering, the cloud-device collaboration service platform 2 can migrate a computing task to the cloud server 1, perform computing by using a powerful computing capability of the cloud server 1, and then return a computing result to the user terminal 3.

In the foregoing device-cloud combination service processing solution, the cloud-device collaboration service platform 2 needs to monitor a service processing status of the user terminal 3, and is responsible for task migration and result returning between the device and the cloud. This solution requires multi-party coordination, and an execution process is complex.

This application provides a device-cloud collaborative working method, a related apparatus, and a communication system. In the method, a device-side device and a cloud-side device collaborate to jointly process a service, to collaboratively meet a service requirement of a user. The cloud-side device may be considered as a shadow node or an external extension device of the device-side device, and is configured to undertake a part or all of services originally executed on the device-side device. This is equivalent to that the device-side device and the cloud-side device form a "new terminal" for device-cloud collaboration service processing, to jointly provide a service for the user. The service provided for the user depends on a user requirement, and may include but is not limited to a game, image processing, video processing, a search service, application start animation effect, transition animation effect, and the like.

For example, after a camera application of the device-side device photographs an original image by using a camera, the device-side device processes (which may include simple processing such as noise reduction, cropping, and sharpening) the image based on computing power of the device-side device, to generate a photo, and then the device-side device uploads the photo/raw photo data to the cloud-side device. The cloud-side device performs further refinement processing (which may include complex processing such as adjusting facial features of a person image in the photo, changing background light and shadow, and adding a background) on the photo/raw data by using strong computing power of the cloud-side device, and then returns a refined photo to the device-side device. In this way, the device-side device can refine the photo by using the computing power of the cloud-side device, to provide a high-quality photo for the user, or even a high-quality photo that cannot be provided by the terminal side due to insufficient computing power resources.

Before the device-cloud collaborative working method provided in this application is described in detail, a communication system provided in embodiments of this application is first described.

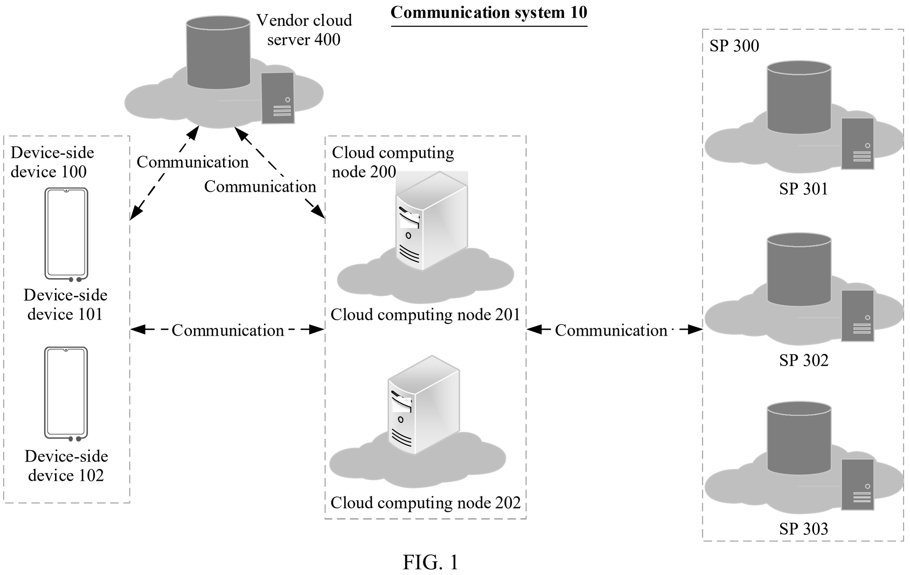

FIG. 1 shows an example of a communication system 10 according to this application.

As shown in FIG. 1, the communication system 10 may include one or more device-side devices 100, one or more cloud computing nodes 200, one or more cloud servers (service provider, SP) 300 configured to provide content, and one or more vendor cloud servers 400.

**The device-side device 100** is an intelligent terminal device, and may be of various types. A specific type of the device-side device 100 is not limited in embodiments of this application. For example, the device-side device 100 may be a mobile phone, and may further include a tablet computer, a desktop computer, a desktop computer with a touch-sensitive surface or a touch panel, a laptop (laptop) computer, a handheld computer, a notebook computer, a smart screen, a wearable device (like a smartwatch or a smart band), an augmented reality (augmented reality, AR) device, a virtual reality (virtual reality, VR) device, an artificial intelligence (artificial intelligence, AI) device, a head unit, a smart headset, and a game console, and may further include an internet of things (internet of things, IoT) device or a smart home device like a smart water heater, a smart lamp, or a smart air conditioner.

The device-side device 100 is configured to directly interact with a user, to provide the user with a service required by the user. For example, the terminal may display a game picture, display a processed picture or video, display a search result, and display application start animation effect or transition animation effect.

One or more apps are installed in the device-side device 100, or the device-side device 100 may access a web page or an applet, and an account may be used to log in to an SP 300 corresponding to the app, the web page, or the applet, to use various services provided by the SP 300. For example, the apps installed in the device-side device 100 may include a browser, a game application, an image processing application, and the like.

The app installed in the device-side device 100, an accessed web page, an accessed applet, or the like may be provided or operated by a network content provider, or may be provided by a device vendor of the device-side device 100. In other words, the apps installed in the device-side device 100 may be a third-party application, or may be a system application. Apps installed in different device-side devices 100, accessed web pages, accessed applets, and the like may be different. This depends on a user requirement. The device vendor mentioned in the following is a device vendor of the device-side device 100.

There may be a plurality of device-side devices 100. The plurality of device-side devices 100 may be provided by a same device vendor, or may belong to different device vendors. This is not limited herein. For example, the plurality of device-side devices 100 may specifically include a device-side device 101 and a device-side device 102, and the device-side device 101 and the device-side device 102 are provided by a same device vendor.

A cloud device like a cloud node or a cloud server in the communication system 10 may provide a corresponding service in an on-demand and easy-to-expand manner by using a network, and may include a virtualized resource jointly constructed by a plurality of physical servers, that is, the cloud device may be distributed on a plurality of different physical devices. Certainly, in some implementations, the cloud device may alternatively be implemented as a physical server or a physical server system.

**The cloud computing node 200** is a device configured to form a "new terminal" with the device-side device 100 in this embodiment of this application.

The cloud computing node 200 has rich processing resources, for example, powerful computing power (including computing power of various processors such as a CPU, a GPU, and an NPU) and large storage space.

The cloud computing node 200 may be implemented as an edge computing (edge computing) node. To be specific, the cloud computing node is deployed at a location close to a demander (for example, a location close to a data source or a user of an application), to shorten response time and reduce a delay in service delivery. In this embodiment of this application, the cloud computing node 200 may include at least the following several deployment manners.

Deployment manner 1: The cloud computing node 200 is deployed at a network edge (for example, an access network) in a mobile edge computing (mobile edge computing, MEC) manner, for example, deployed at a base station provided by an operator. The cloud computing node 200 deployed in the MEC manner may provide a collaboration service for the device-side device 100 by using real-time information on a mobile network side at the network edge. In a possible implementation, there may be base stations provided by a plurality of different operators, and an operator to which the device-side device 100 belongs is determined by the user. Therefore, cloud computing nodes 200 may be deployed at the base stations provided by the plurality of different operators. When the cloud computing node 200 is subsequently allocated to the device-side device 100, only a cloud computing node 200 at a base station provided by an operator to which the device-side device 100 belongs is allocated, and a cloud computing node 200 at another operator is not allocated to the device-side device 100. This can ensure fast communication between the device-side device 100 and the cloud computing node 200.

Deployment manner 2: The cloud computing node 200 is deployed in a bearer network, for example, may be deployed in a packet transport network (packet transport network, PTN) or an optical transport network (optical transport network, OTN).

Deployment manner 3: Centralized deployment: A plurality of cloud computing nodes 200 are deployed in a unified manner, and are not attached to another network device.

In addition to the foregoing several deployment manners, the cloud computing node 200 may alternatively be deployed in another manner, for example, a micro cloud node or a fog computing node. This is not limited in embodiments of this application. In a communication system, there may be a plurality of deployment manners of the cloud computing nodes 200.

There may be a plurality of cloud computing nodes 200 in the communication system 10. For example, cloud computing nodes may be separately deployed in different regions, to provide a collaboration service for device-side devices 100 in different regions. The region herein may be divided by a country, a city, a district under a city, or the like. A size of the region is not limited in embodiments of this application. For example, a cloud computing node 201 may be deployed in a first region, a cloud computing node 202 is deployed in a second region, and the first region is different from the second region.

One cloud computing node 200 may be configured to connect to a plurality of device-side devices 100, to provide the collaboration service for the plurality of device-side devices 100.

The cloud computing node 200 may be provided and managed by the device vendor, or may be provided and managed by an intermediary authorized by the device vendor.

**The SP 300** is configured to provide a content service, and may be specifically configured to receive a request sent by the device-side device 100 or the cloud computing node 200, process the request, and return a processing result to the device-side device 100 or the cloud computing node 200. The SP 300 may be considered as a server end, and the device-side device 100 and the corresponding cloud computing node 200 may be considered as clients.

There may be one or more SPs 300 in the communication system 10. One SP 300 may be configured to provide a service for one app, one web page, or one applet. Different SPs 300 may be configured to provide services for different apps, different web pages, or different applets. Different SPs 300 may be provided or operated by different network content providers. For example, the plurality of SPs 300 in the communication system specifically include an SP 301, an SP 302, and an SP 303. The SP 301 may provide a service for a browser app, the SP 302 may provide a service for a game app, and the SP 303 may provide a service for an image processing app.

One SP 300 may be connected to a plurality of device-side devices 100 and cloud computing nodes 200, to provide a service for the plurality of device-side devices 100 and the cloud computing nodes 200. The plurality of device-side devices 100 and cloud computing nodes 200 may be devices that use an APP, a web page, or an applet corresponding to the SP 300.

**The vendor cloud server 400** is configured to manage a plurality of device-side devices 100 affiliated with a corresponding vendor, and is further configured to manage cloud computing nodes 200 affiliated with the corresponding vendor. The vendor cloud server 400 is provided by the device vendor. If the communication system 10 includes device-side devices of different vendors, the communication system 10 may also include different vendor cloud servers. FIG. 1 shows an example of the vendor cloud server 400. The vendor cloud server 400 may be configured to manage the device-side device 101 and the device-side device 102.

In this embodiment of this application, after the device-side device 100 is powered on, a system account (for example, an account allocated by a manufacturer to which the device-side device belongs) may be registered, and a corresponding vendor cloud server 400 may be logged in to by using the system account, or the vendor cloud server 400 may be directly logged in to by using an existing system account. Then, the vendor cloud server 400 may allocate the cloud computing node 200 to the device-side device 100. For a strategy of allocating the cloud computing node 200, refer to detailed descriptions of subsequent method embodiments. For example, if both the device-side device 101 and the device-side device 102 are located in the first region, the vendor cloud server 400 may allocate the cloud computing node 201 located in the first region to the device-side device 101 and the device-side device 102.

In some implementations, if a region in which the device-side device 100 is located changes, the vendor cloud server 400 may allocate a new cloud computing node 200 to the device-side device 100, to provide a collaboration service for the device-side device 100.

After the vendor cloud server 400 allocates the cloud computing node 200 to the device-side device 100, the cloud computing node 200 also synchronously installs a part or all of applications that are installed in the device-side device 100. In addition, as a user installs a new application in the device-side device 100, the cloud computing node 200 also synchronously installs the new application. Although applications are synchronously installed in the device-side device 100 and the cloud computing node 200, implementations and functions of a same application on different devices may be different. For detailed descriptions, refer to subsequent method embodiments. An application that may be installed on both the device-side device 100 and the cloud computing node 200 may provide processing logic for device-cloud collaboration. The application may also be referred to as a first application.

After the corresponding cloud computing node 200 is allocated to the device-side device 100, the device-side device 100 and the cloud computing node 200 may collaboratively process a service, to provide a service for the user.

In one case, the service collaboratively processed by the device-side device 100 and the cloud computing node 200 needs to be supported by the SP 300. Any one or more of the device-side device 100 and the cloud computing node 200 may initiate a service request to the SP 300. After the SP 300 responds to the request and returns a result, the device-side device 100 and the cloud computing node 200 may present, to the user based on the result, content desired by the user.

In another case, the service collaboratively processed by the device-side device 100 and the cloud computing node 200 does not need to be supported by the SP 300. In this case, the device-side device 100 and the cloud computing node 200 may jointly process a requirement of the user and present content desired by the user to the user.

For a specific collaboration manner between the device-side device 100 and the cloud computing node 200, refer to detailed descriptions of subsequent method embodiments.

In this embodiment of this application, a data (data) structure and content between "new terminals" are defined, that is, a data structure and content of interaction between the device-side device 100 and the corresponding cloud computing node 200 are defined. In addition, an application programming interface (application programming interface, API) and a corresponding programming paradigm between the "new terminals" (namely, between the device-side device 100 and the cloud computing node 200) are defined. The API is used for communication between the device-side device 100 and the cloud computing node 200, the programming paradigm indicates a code writing manner of an application on a device-side device and an application on a cloud computing node. The foregoing definition operation may be performed by the device vendor, and an application developer writes program code of an application by using the definition. Specific implementations of the API and the programming paradigm are not limited in embodiments of this application. Based on this, in this application, the device-side device 100 and the corresponding cloud computing node 200 may communicate with each other based on a defined API, to complete collaborative working.

A data structure and content between the device-side device 100 and the SP 300, or a data structure and content between the cloud computing node 200 and the SP 300 are the same as a data structure and content between the device-side device 100 and the SP 300 in a solution in which there is only the device-side device 100 and no cloud computing node 200 in the conventional technology. In this way, the SP 300 can provide a service required by the "new terminal" for the "new terminal" without sensing the "new terminal."

The foregoing devices in the communication system 10 may communicate with each other by using a plurality of technologies, and different devices may communicate with each other by using different technologies. This is not limited in embodiments of this application. For example, the device-side device 100 and the cloud computing node 200 may communicate with each other through a wireless local area network (wireless local area network, WLAN), a cellular network, and the like. The device-side device 100 and the cloud computing node 200 each may communicate with the SP 300 through a limited wide area network or the like. The device-side device 100 and the vendor cloud server 400 may also communicate with each other through the limited wide area network or the like. The SP 300 and the vendor cloud server 400 may communicate with each other through a wired connection or the like.

A protocol used for communication between the devices in the communication system 10 shown in FIG. 1 and a format of a communication message may be predefined or negotiated by a provider of each device.

The communication system 10 shown in FIG. 1 is merely an example. During specific implementation, the communication system 10 may include devices with more or fewer functions, or some devices may be combined or split. For example, there may be one device-side device 100, and there may also be one cloud computing node 200.

For functions of the devices in the communication system 10 and specific implementations of operations performed by the devices, refer to related descriptions of subsequent method embodiments. Details are not described herein.

Based on the communication system 10 in FIG. 1, the following describes in detail a device-cloud collaborative working method provided in an embodiment of this application.

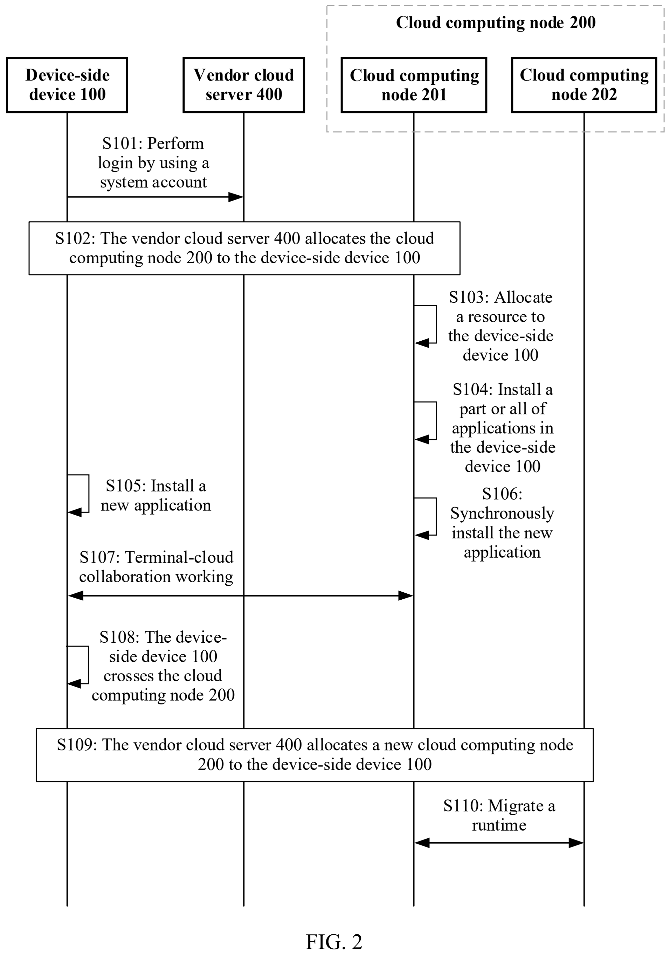

FIG. 2 is an example flowchart of the device-cloud collaborative working method. As shown in FIG. 2, the method may include the following steps.

S101: A device-side device 100 logs in to a vendor cloud server 400.

The device-side device 100 may first register a system account, and then log in to the vendor cloud server 400 by using the registered system account. Alternatively, the device-side device 100 may log in to the vendor cloud server 400 based on a system account registered by a user. The vendor cloud server 400 herein is a cloud server provided by a vendor to which the device-side device 100 belongs.

A manner in which the device-side device 100 registers the system account and a manner in which the device-side device 100 logs in to the vendor cloud server 400 by using the system account are not specifically limited in embodiments of this application. For example, the device-side device 100 may display an account login interface provided by a setting application. After the user inputs a Huawei account on the interface, the device-side device 100 may be triggered to log in, by using the Huawei account, to the vendor cloud server 400 provided by the device vendor.

In a process in which the device-side device 100 logs in to the vendor cloud server 400, the device-side device 100 may send a device identifier and location information of the device-side device 100 to the vendor cloud server 400.

Alternatively, the device-side device 100 may send the device identifier of the device-side device 100 to the vendor cloud server 400 in a process of logging in to the vendor cloud server 400, and then send the location information to the vendor cloud server 400 after the login.

Alternatively, after the login, the device-side device 100 may send the device identifier and the location information of the device-side device 100 to the vendor cloud server 400.

The device identifier of the device-side device 100 may be an internet protocol (internet protocol, IP) address, a media access control (media access control, MAC) address, a universally unique identifier (universally unique identifier, UUID), an international mobile subscriber identity (international mobile subscriber identity, IMSI), a mobile equipment identifier (mobile equipment identifier, MEID), or an international mobile equipment identity (international mobile equipment identity, IMEI), or may be a system account for logging in to the vendor cloud server 400, or the like. This is not limited in embodiments of this application.

In some implementations, after logging in to the vendor cloud server 400, the device-side device 100 may further send information about each application (for example, an application identifier) installed in the device-side device 100 to the vendor cloud server 400, so that the vendor cloud server 400 learns of an application installation status of the device-side device 100.

**S102: The vendor cloud server 400 allocates a cloud computing node 200 to the device-side device 100.**

The vendor cloud server 400 may select one cloud computing node 200 from a plurality of cloud computing nodes 200 managed by the vendor cloud server 400, and allocate the cloud computing node 200 to the device-side device 100. In some other implementations, based on an actual requirement, the vendor cloud server 400 may alternatively allocate a plurality of cloud computing nodes 200 to the device-side device 100.

Specifically, the vendor cloud server 400 is configured to manage a plurality of cloud computing nodes 200 affiliated with a vendor corresponding to the vendor cloud server 400, and therefore can learn of locations and deployment manners of the plurality of cloud computing nodes 200. In this case, the vendor cloud server 400 may select, based on any one or more of the location information of the device-side device 100 and information of the plurality of cloud computing nodes 200, one cloud computing node 200 to allocate the cloud computing node 200 to the device-side device 100.

A strategy for allocating the cloud computing node 200 to the device-side device 100 may include any one of the following.

### Strategy 1:

A cloud computing node 200 closest to the device-side device 100 is selected from the plurality of cloud computing nodes 200 and allocated to the device-side device 100.

In a device-cloud collaboration service processing process, a communication distance between the device-side device and the cloud computing node is a key factor that affects quality of service (quality of service, QoS) of communication, that is, a key factor that affects user experience. According to the strategy 1, the cloud computing node 200 closest to the device-side device 100 is allocated to the device-side device 100, so that a distance between the cloud computing node 200 and the device-side device 100 is shortened as much as possible, and QoS of the device-cloud collaboration processing service can be improved. In this way, use experience of device-cloud collaboration is close to or consistent with that of the device-side device, allowing the user to freely enjoy high-quality services. In particular, after a 5G cellular network with high bandwidth and a low latency and a better network are accessed, the use experience of device-cloud collaboration is almost the same as that of the device-side device.

### Strategy 2:

A cloud computing node deployed in an access network (for example, a cloud computing node deployed at a base station in an MEC manner) is preferentially selected, and a cloud computing node 200 closest to the device-side device 100 is selected from the cloud computing node in the access network and allocated to the device-side device 100.

If the plurality of cloud computing nodes 200 do not include the cloud computing node deployed in the access network, a cloud computing node 200 closest to the device-side device 100 is selected from a cloud computing node deployed in a bearer network and allocated to the device-side device 100.

If the plurality of cloud computing nodes 200 also do not include the cloud computing node deployed in the bearer network, a cloud computing node 200 closest to the device-side device 100 is selected from cloud computing nodes deployed in a centralized manner and allocated to the device-side device 100.

According to the strategy 2, the cloud computing node that is in the access network and that is closest to the device-side device 100 is preferentially selected, and the cloud computing node that is in the bearer network and that is closest to the device-side device 100 is secondly selected. Because the device-side device 100 is closest to the access network and secondly closest to the bearer network in a process of accessing the network, a distance between the device-side device 100 and the cloud computing node 200 allocated to the device-side device 100 may be short, and a quantity of transit devices is small. Therefore, according to the strategy 2, the QoS of the device-cloud collaboration processing service can also be improved, so that the use experience of the device-cloud collaboration is close to or consistent with that of the device-side device, allowing the user to freely enjoy the high-quality services.

### Strategy 3:

A cloud computing node 200 whose distance from the device-side device 100 falls within a specific value (for example, a first value) is allocated to the device-side device 100.

Alternatively, a distance condition is added based on the strategy 1 and the strategy 2. The cloud computing node 200 is allocated to the device-side device 100 only when a distance between the device-side device 100 and the cloud computing node 200 that is determined in the strategy 1 or the strategy 2 falls within the specific value (for example, the first value).

The specific value may be set by the vendor cloud server 400 as required. This is not limited herein.

According to the strategy 3, it can be ensured that the distance between the device-side device 100 and the cloud computing node 200 allocated to the device-side device 100 is less than or equal to the specific value, so that QoS of a device-cloud collaboration processing service can be ensured.

In addition to the three strategies listed in the foregoing examples, the vendor cloud server 400 may further allocate the cloud computing node 200 to the device-side device 100 according to another strategy. For example, available storage space and computing power of each cloud computing node 200 subordinate to the vendor cloud server 400 may be further considered, and the cloud computing node 200 may be allocated based on the available storage space and computing power. In this way, it can be ensured that the cloud computing node 200 allocated to the device-side device 100 can well provide a collaboration service for the device-side device 100. For another example, a region in which the device-side device 100 is located may be further considered. The vendor cloud server 400 may select one or more of the plurality of cloud computing nodes 200 deployed in the region and allocate the one or more cloud computing nodes to the device-side device 100. A strategy of allocating the cloud computing node is not specifically limited in embodiments of this application.

After determining the cloud computing node 200 allocated to the device-side device 100, the vendor cloud server 400 may complete allocation by performing the following operations.

**The vendor cloud server 400 records an allocation relationship.** For example, the vendor cloud server 400 may associate and record device information of the device-side device 100 and device information of the cloud computing node 200 allocated to the device-side device 100. The device information of the device-side device 100 and the device information of the cloud computing node 200 each may include any one or more of a device identifier, location information, a communication address (for example, an IP address or a MAC address), and the like. The allocation relationship is recorded, so that the vendor cloud server 400 manages a plurality of device-side devices and the plurality of cloud computing nodes 200 that are subordinate to the vendor cloud server 400.

**The vendor cloud server 400 sends the device information of the device-side device 100 to the cloud computing node 200 allocated to the device-side device 100.** In this way, the cloud computing node 200 can learn of device-side devices 100 for which the cloud computing node 200 provides the collaboration service.

**The vendor cloud server 400 sends the device information of the determined cloud computing node 200 to the device-side device 100.** In this way, the device-side device 100 can learn of the information of the cloud computing node 200 allocated to the device-side device 100.

It can be learned that a process of allocating the cloud computing node to the device-side device may also be considered as a binding process, that is, the device-side device 100 is bound to the cloud computing node 200 allocated to the device-side device 100.

After learning of the information of each other, the device-side device 100 and the cloud computing node 200 may establish a communication connection to support subsequent device-cloud collaborative working.

**S103: The cloud computing node 200 allocates a resource to the device-side device 100.**

The bound cloud computing node 200 allocates the resource to the device-side device 100, to subsequently provide the collaboration service for the device-side device 100. The allocated resource may include but is not limited to a storage resource, a computing resource, and the like. In some implementations, the cloud computing node 200 may alternatively allocate the resource as required, and when the device-side device 100 needs the resource, coordinate the resource to provide the service for the device-side device 100.

In some implementations, the cloud computing node 200 may provide a runtime (runtime) for the device-side device 100. A definition of the runtime may include: 1. A runtime system (runtime system) is a basic environment or platform for running application program code, where the runtime system is built on an operating system (operating system, OS) of the cloud computing node 200, and is used to support running of application code and processing of application data; and 2. a runtime library (runtime library) that can be used as required includes a function library, an object library, a class library, and the like, to support input/output, memory management, and the like of application code when the application code is run on the runtime library.

If one cloud computing node 200 is allocated to a plurality of different device-side devices 100, the cloud computing node 200 may separately allocate resources to different device-side devices 100, that is, allocate different runtimes to the different device-side devices 100.

The cloud computing node 200 may complete an operation of allocating the resource to the device-side device 100 by performing the following operation: associating and recording device information of the device-side device 100 and information of the runtime provided for the device-side device 100. The information of the runtime may include, for example, an identifier of the runtime, a storage location of the runtime in the cloud computing node 200, and a storage space size.

In addition to the runtime provided by the cloud computing node 200 for the device-side device 100, the device-side device 100 may also include a runtime. The runtime is used to support running of application code and processing of application data of the device-side device 100.

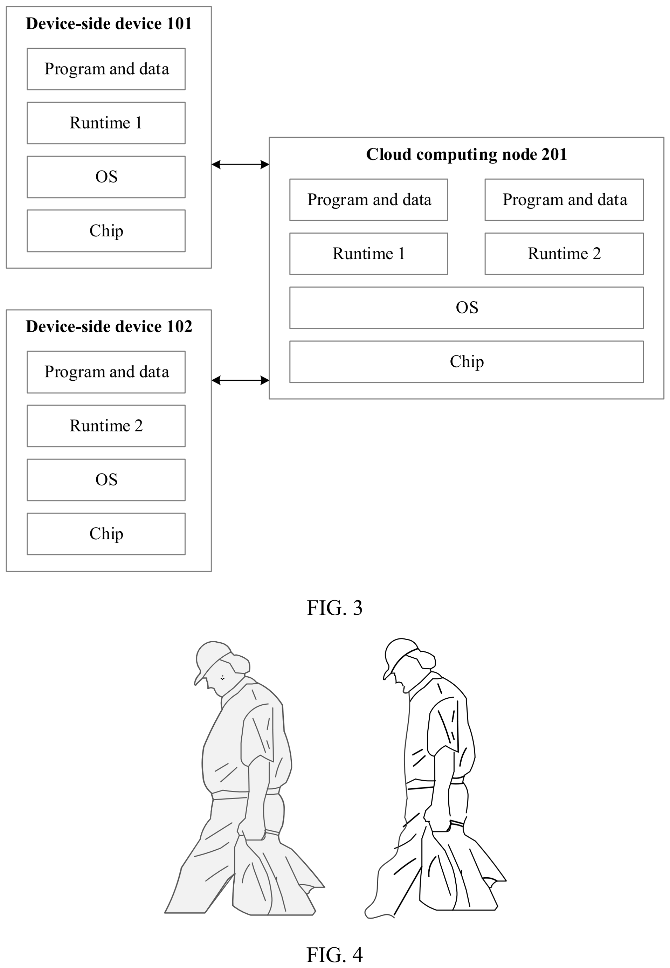

FIG. 3 shows an example of runtime installation in a plurality of devices.

As shown in FIG. 3, if the cloud computing node 201 is allocated to the device-side device 101 and the device-side device 102, the cloud computing node 201 provides a runtime 1 for the device-side device 101, and also provides another runtime 2 for the device-side device 102. In addition, the device-side device 101 and the device-side device 102 each also have a corresponding runtime.

In this embodiment of this application, the device-side device 100 may be referred to as a first device, and the cloud computing node 200 initially allocated by the vendor cloud server 400 to the device-side device 100 may be referred to as a first node. The runtime allocated by the first node to the first device may be referred to as a first runtime.

**S104: Install a part or all of existing applications in the device-side device 100 in the cloud computing node 200.**

After logging in to the vendor cloud server 400, the device-side device 100 may maintain communication with the vendor cloud server 400, and send application installation in the device-side device 100 to the vendor cloud server 400.

The cloud computing node 200 may install, in the runtime provided for the device-side device 100, the part or all of installed applications based on the application installation in the device-side device 100.

In some implementations, after allocating the cloud computing node 200 to the device-side device 100, the vendor cloud server 400 may indicate, to deliver installation packages of the part or all of applications in the device-side device 100 to the cloud computing node 200, an application store (for example, an application store server) provided by the device vendor, for installation in the cloud computing node 200. The vendor cloud server 400 may further associate and deliver the device identifier of the device-side device 100. In this way, the cloud computing node 200 can find a corresponding runtime based on the device identifier, and then install an application in the runtime.

In some other implementations, after allocating the cloud computing node 200 to the device-side device 100, the vendor cloud server 400 may send the application installation in the device-side device 100 to the cloud computing node 200. Then, the cloud computing node 200 downloads an installation package from the application store (for example, the application store server) provided by the device vendor, and installs an application in the runtime provided for the device-side device 100.

In some other implementations, after learning of the information of the cloud computing node 200 allocated to the device-side device 100, the device-side device 100 may directly send the application installation in the device-side device 100 to the cloud computing node 200. Then, the cloud computing node 200 downloads an installation package from the application store (for example, the application store server) provided by the device vendor, and installs an application in the runtime provided for the device-side device 100.

In S104, the part or all of applications installed in the cloud computing node 200 may include an application on which adaptive improvement is made for the device-cloud collaborative working method provided in this application. An application on which no adaptive improvement is made for this application in the device-side device 100 does not need to be installed in the cloud computing node 200. For a manner of making adaptive improvement on an application for the device-cloud collaborative working method provided in this application, a form and function of an improved application, and the like, refer to related descriptions of subsequent steps. Details are not described herein.

In some other implementations, the part or all of applications installed in the cloud computing node 200 may include a preset quantity of applications that are most frequently used in the device-side device 100 or a preset quantity of applications recently used in the device-side device 100 in applications on which adaptive improvement is made for this application. In this way, an application may be installed in the cloud computing node 200 based on a use frequency or a use habit of the user, so that the user requirement can be met, and space of the cloud computing node can be saved.

**S105: Install a new application in the device-side device 100.**

In a possible implementation, after the cloud computing node 200 is allocated to the device-side device 100, as the user uses the device-side device 100, the device-side device 100 may install the new application based on a user requirement. The device-side device 100 may download the new application from the application store provided by the device vendor.

**S106: Synchronously install the new application in the cloud computing node 200.**

If the new application installed in the device-side device 100 is an application on which adaptive improvement is made for this application, the cloud computing node 200 synchronously installs the application. If the new application installed in the device-side device 100 is not an application on which adaptive improvement is made, but is a conventional application, the cloud computing node 200 does not need to synchronously install the application.

In some implementations, after receiving an application download request of the device-side device 100, the application store provided by the device vendor may send an installation package to both the device-side device 100 and the cloud computing node 200, so that the cloud computing node 200 also synchronously installs the new application.

In some other implementations, after learning that the new application is installed in the device-side device 100, the vendor cloud server 400 may indicate the application store to synchronously deliver the application installation package to the cloud computing node 200, or notify the cloud computing node 200 of the new application, and the cloud computing node 200 downloads and installs the application.

In S105 and S106, as the device-side device 100 installs the new application, the corresponding cloud computing node 200 synchronously installs the new application. In this way, an application in a runtime in the cloud computing node 200 can match an application in a runtime in the device-side device 100, preparing for subsequent device-cloud collaboration.

Steps S105 and S106 are optional steps. If the user does not install the new application in the device-side device 100, steps S105 and S106 do not need to be performed.

Similar to S105 and S106, if the device-side device 100 deletes a part of applications based on an indication of the user, correspondingly, the cloud computing node 200 also deletes the part of applications in the corresponding runtime.

It can be learned from S104 to S106 that, as the user uses the device-side device 100, various applications that meet the user requirement may be installed in the device-side device 100 and the corresponding cloud computing node 200, and a personalized runtime matching with the user is formed on both the device-side device 100 and the cloud computing node 200.

It can be learned from S104 to S106 that various applications (including an application that provides a device-cloud collaboration service and on which adaptive collaboration is performed for this application, and a common application that is not improved) are installed in the device-side device 100 based on an actual requirement of the user. However, only the application that provides the device-cloud collaboration service and on which adaptive collaboration is performed for this application is installed in the corresponding cloud computing node 200. Therefore, the application installed in the cloud computing node 200 is included in the applications installed in the device-side device 100. In other words, it may be considered that the applications installed in the device-side device 100 are a full set, and the application that is installed in the cloud computing node 200 and that corresponds to the device-side device 100 is a subset of the device-side full set.

**S107: Both the device-side device 100 and the cloud computing node 200 run a first application, and work collaboratively in this process.**

In some implementations, if there are a plurality of cloud computing nodes 200 allocated by the vendor cloud server 400 to the device-side device 100 in S102, in S107, the device-side device 100 may select one cloud computing node 200 from the cloud computing nodes 200 according to the following strategy to work collaboratively: selecting the cloud computing node based on a real-time requirement of the service. Specifically, a cloud computing node deployed in an access network (for example, a cloud computing node deployed at a base station in an MEC manner) is selected for a highly real-time service, a cloud computing node deployed in a bearer network is selected for a moderately real-time service, and a cloud computing node deployed in a centralized manner is selected for a service that has no real-time requirement. In this way, the real-time requirement of the user for the service can be met, and user experience and costs can be considered.

Both the device-side device 100 and the cloud computing node 200 run the first application by using the runtime, and work collaboratively with each other in a process of running the first application, to jointly provide the service required by the user.

The first application is the foregoing application on which adaptive improvement is made for the device-cloud collaborative working method provided in this application. The first application may be an application pre-installed in the device-side device 100, or may be an application downloaded by the user in a subsequent process of using the device-side device 100. There may be a plurality of types of first applications, for example, a game application, a browser, an image processing application, and a video application. This is not limited in embodiments of this application.

Although both are referred to as the first application, the first application in the device-side device 100 and the first application in the cloud computing node 200 are not completely the same. For example, program code of the first application in the device-side device 100 may be different from program code of the first application in the cloud computing node 200.

The first application in the device-side device 100 provides processing logic for the device-side device, and the first application in the cloud computing node 200 provides processing logic for the cloud computing node. In addition, the first application in the device-side device 100 and the first application in the cloud computing node 200 can work collaboratively with each other, to jointly provide the service for the user.

A function and an implementation of the first application in the device-side device 100 and a function and an implementation of the first application in the cloud computing node 200 may be independently defined by an application developer, or may be defined through negotiation between the application developer and the device vendor. For functions and implementations of the first application in the device-side device and the cloud computing node, refer to respective operations of the device-side device and the cloud computing node in collaborative working described subsequently.

A difference between the first application in the device-side device 100 and the first application in the cloud computing node 200 determines how the device-side device 100 and the cloud computing node 200 work collaboratively, that is, determines which data is processed in the terminal side and which data is processed in the cloud side.

**The following describes a collaborative working process of the device-side device 100 and the cloud computing node 200.**

In some implementations, after starting the first application, the device-side device 100 may send, to the cloud computing node 200, a first notification message that carries an identifier of the started first application, to indicate the cloud computing node 200 to start the first application. Then, the cloud computing node 200 also correspondingly runs the first application by using the runtime, to support device-cloud collaborative working. In this way, the cloud computing node 200 starts the first application in advance, and when the device-side device 100 has a collaboration requirement, the device-side device 100 can quickly respond to the requirement of the device-side device 100 by using the started first application.

In another implementation, after starting the first application, the device-side device 100 communicates with the cloud computing node 200 (for example, sends related control data or service data to the cloud computing node 200) when there is a collaboration requirement. After learning that the device-side device 100 has the collaboration requirement, the cloud computing node 200 runs the corresponding runtime and runs the first application, to respond to the collaboration requirement of the device-side device 100.

In embodiments of this application, the device-side device 100 and the cloud computing node 200 may determine, based on a scheduling strategy, how the device-side device 100 and the cloud computing node 200 work collaboratively, that is, determine operations performed by the device-side device 100 and the cloud computing node 200 in a service processing process. In some other implementations, the device-side device 100 and the cloud computing node 200 may negotiate to determine whether the device-side device 100 and the cloud computing node 200 need to work collaboratively and how the device-side device 100 and the cloud computing node 200 work collaboratively, that is, jointly determine operations performed by the device-side device 100 and the cloud computing node 200 in the service processing process. Alternatively, the device-side device 100 may determine whether the device-side device 100 and the cloud computing node 200 need to work collaboratively, and the device-side device 100 may indicate how the cloud computing node 200 works.

A factor that affects a collaborative working manner of the device-side device 100 and the cloud computing node 200 may include any one or more of the following: application load, a computing power requirement, communication QoS between the terminal and the cloud, a service processing latency, a real-time requirement of a service, and the like.

In the preceding information:

### Application load

The application load refers to an amount of data that needs to be processed in a current service logic stage. Different service logic stages of a same application may have different loads, and different applications may also have different loads. Optionally, when the application load is larger, more operations may be migrated to the cloud computing node for execution.

In some implementations, when the application load is heavy, a service that does not need to respond to a user operation in real time may be preferentially processed on the cloud computing node 200. Then, the device-side device 100 directly obtains a result from the cloud computing node 200, and presents the result to the user.

For example, for a search service of the browser application, after receiving a user operation (for example, a search operation) of triggering a service by the user, the device-side device 100 may send control data (for example, a search instruction) to the cloud computing node 200, to indicate the cloud computing node 200 to complete search work. Then, the cloud computing node 200 returns a search result to the device-side device 100. Alternatively, if the cloud computing node 200 has performed a same search operation before, after receiving the control data, the cloud computing node 200 may directly return the search result to the device-side device 100, and does not need to perform repeated search, thereby reducing search time.

Because the cloud computing node 200 has powerful computing power and a high processing speed, most operations are migrated to the cloud side for execution, so that a latency is low, and it may be considered that there is almost no latency.

### Computing power requirement

The computing power requirement refers to an amount of computing resources required to support the current application load. Computing power requirements of different service logic stages of a same application may be different, and computing power requirements of different applications may also be different. Optionally, when the computing power requirement is higher, more operations may be migrated to the cloud computing node for execution. In this way, computing power of the device-side device 100 can be saved, or a requirement for the device-side device 100 can be reduced, and a good service can also be provided for the user.

### Communication QoS between the device and the cloud

The communication QoS depends on a current network status, and communication QoS may be different at different time. Optionally, better communication QoS indicates that more operations may be migrated to the cloud computing node for execution.

### Service processing latency

The processing latency of a service depends on the service, and may be considered as duration required for processing the service, for example, duration required for processing an image or duration required for processing a video. Optionally, a service with a long processing latency may be migrated to the cloud computing node for execution, thereby saving computing power of the device-side device.

### Real-time requirement of a service

The real-time requirement of the service depends on a user experience requirement for the service. For example, a browser search service or an image processing service does not require real-time response. A game service has high real-time performance and requires real-time response from the device and the cloud. Optionally, for a highly real-time service, the cloud computing node may complete most service logic and collaborate with the device-side device to jointly provide a required service for the user. For a moderately real-time service which has a high computing power requirement, the cloud computing node may complete most workload.

In some implementations, the moderately real-time service may be processed in serial by the device and the cloud. This is equivalent to that the device-side device 100 completes a basic operation, and the cloud computing node 100 performs a further enhancement operation on the basis of the basic operation, to provide a different differentiation result from that of a solution in which only the terminal side is used for processing.

For example, for a device-cloud collaboration photographing service, after receiving a photographing operation of the user, the device-side device 100 may generate a user preview photo and raw data (raw data) of a photo (which may also be referred to as an original image), and send the raw data of the photo to the cloud computing node 200. The cloud computing node 200 automatically performs further enhancement processing (for example, automatic beautification and definition enhancement) on the photo. Alternatively, the user may input some processing operations (for example, a personalized editing requirement, filter addition, defogging, and multi-person group photo separation) based on the original photo, and the device-side device 100 sends an instruction of the user operation to the cloud computing node 200. Then, the cloud computing node 200 performs targeted processing on the raw data of the photo based on the user operation. Then, the cloud computing node 200 returns a processed photo (also referred to as an image) to the device-side device 100, and the device-side device 100 obtains a high-quality photo processed by the cloud side. Generally, there is a specific period of time between tapping to take a photo and viewing a photo by the user, and the period of time is long enough for the cloud computing node 200 to return a processed photo and deliver the processed photo to the device-side device 100 for display. Therefore, the user can obtain good photographing experience.

FIG. 4 is an example of a diagram of image processing comparison between the device and the cloud. A photo on a left side in FIG. 4 may be an original photo generated by the device-side device 100, and a photo on a right side in FIG. 4 may be a refined photo obtained after further processing by the cloud computing node 200. It can be learned by comparing the two photos that refinement processing such as brightness increase, skin smoothing, face defect removal, and human body slimming is performed on a portrait in the photo processed by the cloud computing node 200.

Because the cloud computing node 200 has powerful computing power and a high processing speed, in the foregoing solution of processing the photo in the device-cloud collaboration manner, an overall latency of the photographing service can be reduced.

In some implementations, for the highly real-time service, most processing operations may also be performed by the cloud side. For example, the device-side device 100 may continuously receive operation instructions input by the user, and the cloud computing node 200 continuously processes services according to these operation instructions, to achieve real-time collaboration effect.

For example, for a device-cloud collaboration online game service, the device-side device 100 is configured to interact with the user, receive an operation instruction (for example, switching an angle of view of a game map or an attack operation) input by the user, and then send indication information of the operation instruction to the cloud computing node 200. Then, the cloud computing node 200 renders a new game picture according to the operation instruction, and returns a rendering result to the device-side device 100 for presentation. A real-time requirement of the online game service can be met provided that time needed by the cloud computing node 200 for returning the game picture can meet a game refresh rate requirement of the device-side device 100. This provides smooth game experience for the user. Herein, the cloud computing node 200 has powerful computing power, and can provide a high-quality rendering result and high-quality game experience for the user. For example, the cloud computing node 200 can render effective lighting effect based on global lighting, and can reflect a lighting change of a game picture. In this way, the device-side device 100 with a low hardware configuration that cannot independently present high-quality game effect can also provide high-quality game experience for the user by using the device-cloud collaboration solution in this application.

In the online game service, smoothness and stability of the picture are important factors that affect user experience. Because the online game service in this application may be collaboratively processed by the device and the cloud, a game image frame returned by the cloud computing node 200 may include a timestamp. In this way, the device-side device 100 may arrange a plurality of frames of images returned by the cloud computing node 200 in sequence without disorder, and the device-side device 100 may further use a vertical synchronization signal (V-sync) to keep a refresh rate of a display consistent with a frame rate during processing of the terminal and the cloud, to maintain stability of quality of an output picture.

Because the cloud computing node 200 has powerful computing power and a high processing speed, in the foregoing solution of processing the online game service in the device-cloud collaboration manner, an overall service latency can be reduced.

The foregoing example is merely an example, and another scheduling strategy may alternatively be constructed based on an actual service requirement. This depends on a definition of an application developer. The scheduling strategy is not specifically limited in embodiments of this application.

An application can have different scheduling strategies in different service logic stages. This is equivalent to that a same application may have a plurality of different scheduling strategies. Certainly, different applications may also have different scheduling strategies.

It can be learned from the foregoing several scheduling strategies that data sent by the device-side device 100 to the cloud computing node 200 may include two types: 1. Control data, indicating the cloud computing node 200 to perform some operations. For example, in the browser search service, the device-side device 100 sends control data that indicates search to the cloud computing node 200, and in the game service, the device-side device 100 sends control data that includes the user operation instruction to the cloud computing node 200. 2. Service data, used to be sent to the cloud computing node 200 for further processing. For example, in the photographing service, the device-side device 100 sends the raw data (raw data) of the photo to the cloud computing node 200. The service data sent by the device-side device 100 to the cloud computing node 200 may be referred to as first service data.

The data returned by the cloud computing node 200 to the device-side device 100 is usually processed service data. The service data returned by the cloud computing node 200 to the device-side device 100 may be referred to as second service data. For example, the second service data may include the search result, the image obtained after original image processing, the rendered game picture, and the like.

It can be learned from the foregoing descriptions of the device-cloud collaborative working process that, in collaborative working, the device-side device 100 and the cloud computing node 200 have respective responsibilities. Both the device-side device 100 and the cloud computing node 200 run the first application, but perform different operations to process different data and data amounts. In this way, the insufficient computing power on the terminal side can be compensated for, and enhanced experience can be provided for the user. For example, during photographing, advanced refinement may be performed on the portrait by using cloud computing power, and a single person or an object may be selected in a group photo for further processing.

In the device-cloud collaborative working process, if a service provided by the device-side device 100 and the cloud computing node 200 for the user requires support from a network side, the cloud computing node 200 may further interact with an SP 300 corresponding to the first application in the collaboration process. For example, the cloud computing node 200 may initiate a service request to the SP 300. After the SP 300 returns data, the device-side device and the cloud computing node 200 collaboratively process the data. Alternatively, the device-side device 100 may initiate the service request to the SP 300. After the SP 300 returns data, the device-side device and the cloud computing node 200 collaboratively process the data.

In some other implementations, in the device-cloud collaborative working process, a service provided by the device-side device 100 and the cloud computing node 200 for the user does not need support from the network side, and the device-side device 100 and the cloud computing node 200 collaborate to provide the service required by the user for the user. Therefore, interaction with the SP 300 is not needed.

One cloud computing node 200 may provide a service for a plurality of device-side devices 100. One device-side device 100 may be referred to as a first device, and another device-side device 100 may be referred to as a second device. Similar to a process in which the cloud computing node 200 provides the collaboration service for one of the device-side devices 100 (namely, the first device), in a process in which the cloud computing node 200 provides the collaboration service for the another device-side device (namely, the second device), the second device is configured to: start a second application, and send third data to the first node, where the third data includes control data and/or third service data of the second application. The first node is further configured to: allocate a second runtime to the second device, start the second application by using the second runtime, receive third data by using the second application, generate fourth data based on the third data, and return the fourth data to the second device, where the fourth data includes fourth service data of the second application, and the second runtime is different from the first runtime. The second device is further configured to provide a service based on the fourth data. The second application herein may be the same as or different from the foregoing first application.

Optional step S108: The device-side device 100 crosses the cloud computing node.

A case in which the device-side device 100 crosses the cloud computing node may include the following several cases.

Case 1: The cloud computing node 200 allocated to the device-side device 100 is deployed at the base station. If cross-base station roaming occurs in the device-side device 100, a new cloud computing node 200 needs to be allocated. Roaming means that the device-side device 100 leaves a registered region of a cellular mobile service and enters another region. This is equivalent to that a location of the device-side device 100 changes greatly.

Case 2: The cloud computing node 200 allocated to the device-side device 100 is deployed in the bearer network and is a cloud computing node 200 closest to the access network (for example, the base station). If cross-bearer-network roaming occurs in the device-side device 100, a new cloud computing node 200 needs to be allocated.

Case 3: After the location of the device-side device 100 is moved, a cross-cloud computing node case occurs. Specifically, after the location of the device-side device 100 is moved, if a cloud computing node reallocated to the device-side device 100 at a new location according to the allocation strategy (for example, the strategy 1 with the shortest distance) in S102 is different from the cloud computing node 200 corresponding to the current device-side device 100, it is considered that the case of cross-cloud computing nodes occurs. In this case, subsequent step S 109 may be performed.

**Optional step S109: The vendor cloud server 400 allocates a new cloud computing node 200 to the device-side device 100.**

Because the vendor cloud server 400 keeps communicating with the device-side device 100, the vendor cloud server 400 can learn of the cross-cloud computing node case of the device-side device 100, and determine, based on the cross-cloud computing node case of the device-side device 100, whether to perform S109.

The vendor cloud server 400 may reallocate the new cloud computing node 200 to the device-side device 100 based on the new location of the device-side device 100 after the device-side device 100 crosses the cloud computing node. For a strategy and a specific operation of allocating the cloud computing node, refer to the descriptions of S102. In some implementations, a distance between the device-side device 100 and the new cloud computing node 200 is less than a distance between the device-side device 100 and the original cloud computing node 200.

To distinguish the original cloud computing node from the new cloud computing node, the original cloud computing node is marked as the cloud computing node 201, and the new cloud computing node is marked as the cloud computing node 202.

The new cloud computing node 200 may be referred to as a second node. A runtime allocated by the second node to the device-side device 100 may be referred to as a third runtime.

**Optional step S110: Migrate the runtime between the new cloud computing node and the old cloud computing node.**

Runtime migration may include the following operations:

**The new cloud computing node 202 allocates a resource to the device-side device 100, and deploys the runtime for the device-side device 100.** The cloud computing node 202 may learn of the application installation in the device-side device 100 from the vendor cloud server 400, download the corresponding application from the application store, and install the application in the runtime deployed for the device-side device 100. Alternatively, the cloud computing node 202 may directly obtain, from the original cloud computing node 201, the application code that is installed for the device-side device 100 by the original cloud computing node 201 in a personalized manner, and install a corresponding application in the runtime of the cloud computing node 202 based on the application code. In this way, the new cloud computing node 202 also meets a condition for providing the collaboration service for the device-side device 100, and the new cloud computing node 202 may subsequently provide the collaboration service for the device-side device 100.

**Optionally, the original cloud computing node 201 releases the runtime deployed for the device-side device 100.** The original cloud computing node 201 may release a runtime resource originally deployed for the device-side device 100, clear various types of application code originally installed for the device-side device 100 and related service data, and release a storage resource and a computing resource originally allocated to the device-side device 100. Resources in each cloud computing node can be saved by releasing the resources, thereby avoiding a waste of resources.

For example, the user uses a mobile phone in a region B of a city A, and a runtime of the mobile phone has a "cloud runtime" of the mobile phone on a cloud computing node in the region B. When the user uses the mobile phone in a region M of a city K, a new "cloud runtime" is deployed on a cloud computing node in the region M, and a "cloud runtime" resource of the cloud computing node in the region B is released. When the user returns to the city A or arrives at a city X, the "cloud runtime" on the cloud computing node in the region M is released, and a new "cloud runtime" is allocated to provide a service for the user through collaboration with the device.

S108 to S110 may occur at any time point, depending on movement of the device-side device 100 carried by the user. Therefore, S108 to S110 may be performed not only after S107, but also at any time point before S107. After S108 to S110 are performed, the new cloud computing node works collaboratively with the device-side device 100, to provide the service required by the user.

The device-cloud collaborative working method shown in FIG. 2 has at least the following technical effect.
1. The cloud computing node is used to process services, and a requirement for a capability of the device-side device is low. Regardless of the capability of the device-side device, high-quality user experience can be ensured with the support of the cloud computing node.
   If the capability of the device-side device is low, the cloud computing node can make up for a disadvantage of the device-side device. In comparison with providing the service for the user only by using the device-side device, in this application, a stronger and higher-quality service can be provided. In this way, even the device-side device with the low configuration can provide the high-quality service for the user, thereby ensuring user experience.
2. Processing the service by using a capability of the cloud computing node is equivalent to moving a part or all of services to the cloud. Therefore, computing power and energy consumption of the device-side device can be reduced, a battery life of the device-side device can be prolonged, and good device use experience can be provided for the user.
3. If the service processed through device-cloud collaboration needs support from another service provider, because the device-side device and the cloud computing node form a "new terminal" for processing the service through device-cloud collaboration, a data format and content used by the "new terminal" to communicate externally with the another service provider may be the same as that used by the original device-side device to communicate externally with the another service provider. Therefore, implementations of the solutions of this application can be conveniently and cost-effectively applied to a large quantity of applications without requiring perception by another service provider or adaptation improvement by another service provider. This ensures that a plurality of applications can provide high-quality and excellent use experience for the user based on this application.
4. One cloud computing node may be connected to a plurality of device-side devices, and collaborate with the plurality of device-side devices to process the service. In comparison with a solution in which the device-side device provides the service by improving the configuration, in the solution of this application, one cloud computing node can assist a plurality of device-side devices to provide a high-quality service, so that overall solution costs can be reduced while ensuring user experience.
5. Currently, the user obtains and processes information by using a terminal, to improve efficiency and quality of work and life of the user. The terminal is a personal information assistant, and the user needs to understand, filter, judge, and process a large amount of information. In this application, a foundation model is deployed in the cloud runtime to collaborate with a general model provided by each service, so that the new terminal of device-cloud collaboration can understand different intents of different users in different scenarios, provide personalized services and applications for the users through multi-model interaction (voice, touch, keyboard and mouse, gesture, gaze, ..., and the like), become an intelligent assistant for the users, provide one-step solutions for the users based on the foundation model, and deliver unique user experience to the users. For example, a conference secretary needs to set an alarm, start recording, convert a voice message to a text message, and make meeting minutes in a plurality of steps. Based on the new terminal, the secretary can complete the steps through voice interaction in one step: Please help me enable a meeting mode at 9:00 and provide meeting minutes for review at 11:00. This is equivalent to that, with help of the strong computing power of the cloud computing node, the "new terminal" can install an application with a powerful function, to provide the user with a service of higher quality than that in the past, and can further provide personalized services for different users.
6. In addition, currently, a heartbeat message is kept between each application of the terminal and an SP cloud service of the application, so that the heartbeat message can be delivered in time when the cloud service needs to notify the user. However, for the terminal, power is greatly wasted to passively receive the message, and use of precious air interface resources between the mobile network and the terminal is increased. In this application, each application may be deployed in the cloud runtime to be responsible for a heartbeat connection to the SP, and a quantity of heartbeat connections to the terminal side is reduced. This does not affect service experience, and can save power of the terminal and save air interface resource occupation.

The following describes a hardware architecture and a software architecture of each device provided in embodiments of this application.

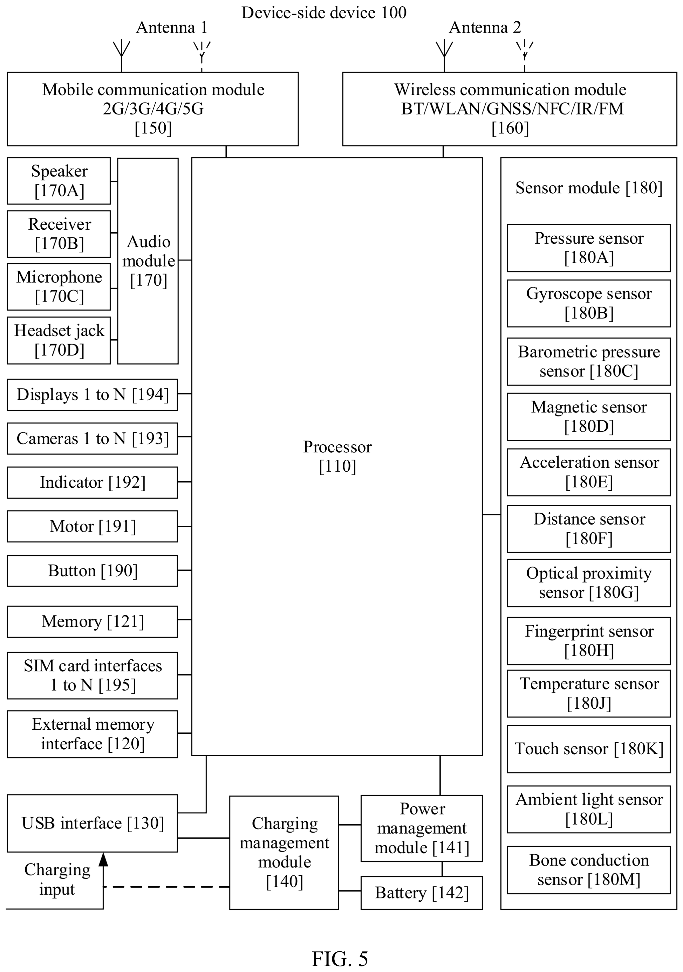

FIG. 5 is a diagram of a hardware structure of a device-side device 100 according to an embodiment of this application. The device-side device 100 may be the device-side device 100 in the communication system shown in FIG. 5.

As shown in FIG. 5,device-side the device-side device 100 may include a processor 110, an external memory interface 120, a memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the device-side device 100. In some other embodiments of this application, the device-side device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

The charging management module 140 is configured to receive a charging input from a charger.

The power management module 141 is configured to connect to the battery 142, the charging management module 140, and the processor 110.

A wireless communication function of the device-side device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the device-side device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the device-side device 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the device-side device 100 and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the device-side device 100 are coupled, and the antenna 2 and the wireless communication module 160 in the device-side device 100 are coupled, so that the device-side device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The device-side device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, or the like. The display 194 includes a display panel.

The device-side device 100 may implement a photographing function through the ISP, the camera 193, the video codec, the GPU, the display 194, the application processor, and the like.

The memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM generally referred to as DDR5 SDRAM), or the like. The nonvolatile memory may include a magnetic disk storage device and a flash memory (flash memory).

The flash memory may be classified into a NOR flash, a NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like according to storage specifications.

The random access memory may be directly read and written by the processor 110, may be configured to store executable programs (such as machine instructions) of an operating system or another running program, and may also be configured to store data of users and applications.

The non-volatile memory may also store the executable programs, the data of the user and the application, and the like, and may be loaded into the random access memory in advance, to be directly read and written by the processor 110.

The external memory interface 120 may be configured to connect to an external nonvolatile memory, to expand a storage capability of the device-side device 100. The external nonvolatile memory communicates with the processor 110 through the external memory interface 120, to implement a data storage function. For example, files such as music and videos are stored in the external nonvolatile memory.

The device-side device 100 may implement an audio function by using the audio module 170, the speaker 170A, the receiver 170B, the microphone 170C, the headset jack 170D, the application processor, for example, music playing and recording.

In embodiments of this application,
the processor 110 is configured to install one or more applications, including the first application mentioned in the foregoing embodiments.

The mobile communication module 150, the wireless communication module 160, the antenna, and the like are configured to support communication between the device-side device 100 and another device (for example, the vendor cloud server 400, the cloud computing node 200, or the application store server). For a process of communication between the device-side device 100 and the another device, refer to the detailed descriptions of the foregoing method embodiments.

The memory 121 is configured to store implementation code of device-cloud collaborative working provided in this application on the device-side device 100. The processor 110 is configured to read the code to complete implementation of the device-cloud collaboration method on the device-side device 100. The memory 121 may be further configured to store implementation code of each application (including the first application) loaded in the device-side device 100.

The display 194 may be configured to interact with a user, receive various operations input by the user, and may be further configured to display a result of device-cloud collaborative working, for example, display a game picture, display a processed picture and video, display a search result, and display application start animation effect and transition effect.

An information input device like the microphone 170C and the camera 193 may also be configured to receive the various interaction operations input by the user.

A software operating system (operating system, OS) may be configured in the device-side device 100. The OS may include, for example, but is not limited to, HarmonyOS^{®}, Android^{®}, iOS^{®}, Windows^{®}, Linux^{®}, and the like.

A software system of the device-side device 100 may use a layered architecture, an event-driven architecture, a microkernel architecture, a micro service architecture, or a cloud architecture. In embodiments of this application, a mobile operating system with a layered architecture is used as an example to illustrate a software structure of the device-side device 100.

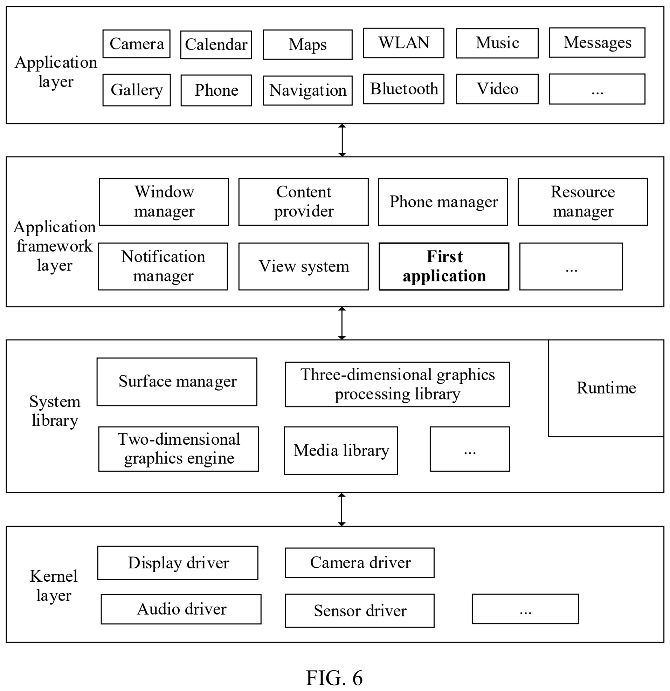

FIG. 6 shows a software architecture of the device-side device 100 according to an embodiment of this application.

In a layered architecture, software is divided into several layers, and each layer has a clear role and task. The layers communicate with each other through a software interface. In some embodiments, the mobile operating system is divided into four layers: an application layer, a program framework layer/core service layer, an underlying library and a runtime, and a kernel layer from top to bottom.

The application layer may include a series of application packages.

As shown in FIG. 6, the application packages may include applications such as a first application, Camera, Gallery, Calendar, Phone, Maps, Navigation, WLAN, Bluetooth, Music, Video, and Messages. For an implementation and a function of the first application in the device-side device 100, refer to related descriptions of the foregoing method embodiments.

The program framework layer provides an application programming interface (application programming interface, API) and a programming framework for an application at the application layer. The program framework layer includes some predefined functions.

As shown in FIG. 6, the program framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and a bookmark, an address book, and the like.

The view system includes visual controls such as a control for displaying a text and a control for displaying an image. The view system may be configured to construct an application. A display interface may include one or more views. For example, a display interface including a messages notification icon may include a text display view and an image display view.

The phone manager is configured to provide a communication function of the device-side device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification-type message that may automatically disappear after a short pause without requiring user interaction. For example, the notification manager is configured to indicate download completion, give a message notification, and the like. The notification manager may alternatively be a notification that appears in a top status bar of the system in a form of graph or scroll bar text, for example, a notification of an application that is run on the background, or may be a notification that appears on a screen in a form of dialog window. For example, text information is displayed in the status bar, an alert tone is made, the device-side device vibrates, or the indicator light blinks.

The runtime may be all code libraries, frameworks, and the like that are needed for running a program. For example, for the C language, the runtime includes a series of function libraries needed for running a C program. For the Java language, in addition to a kernel library, the runtime further includes a virtual machine required for running a Java program, and the like. The kernel library may include a function that needs to be invoked in the Java language.

The underlying library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

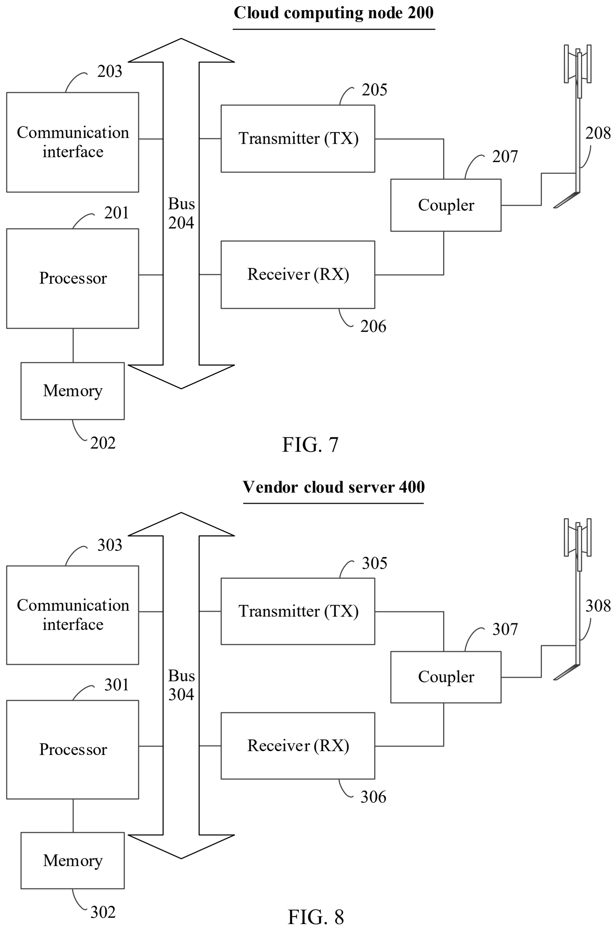

FIG. 7 is a diagram of a hardware structure of a cloud computing node 200 according to an embodiment of this application. The cloud computing node shown in FIG. 7 may be the cloud computing node 200 in the foregoing communication system 10.

As shown in FIG. 7, the cloud computing node may include one or more processors 201, a memory 202, a communication interface 203, a transmitter 205, a receiver 206, a coupler 207, and an antenna 208. These components may be connected through a bus 204 or in another manner. In FIG. 7, for example, the components are connected through the bus. In the preceding information:

The communication interface 203 may be used by the cloud computing node to communicate with another communication device. Specifically, the communication interface 203 may be a 3G communication interface, a long term evolution (LTE) (4G) communication interface, a 5G communication interface, a WLAN communication interface, a WAN communication interface, or the like. Not limited to being provided with a wireless communication interface, the network device 300 may be further provided with a wired communication interface 203 to support wired communication, for example, a backhaul link between the cloud computing node and another computing node may be a wired communication connection.

In some embodiments of this application, the transmitter 205 and the receiver 206 may be considered as a wireless modem. The transmitter 205 may be configured to perform transmission processing on a signal output by the processor 201. The receiver 206 is configured to receive a signal. In the cloud computing node, there may be one or more transmitters 205 and receivers 206. The antenna 208 may be configured to convert electromagnetic energy in a transmission line into an electromagnetic wave in free space, or convert an electromagnetic wave in the free space into electromagnetic energy in the transmission line. The coupler 207 may be configured to split a mobile communication signal into a plurality of signals, and distribute the plurality of signals to a plurality of receivers 206. It may be understood that the antenna 208 of the network device may be implemented as a large-scale antenna array.

The memory 202 is coupled to the processor 201, and is configured to store various software programs and/or a plurality of groups of instructions. Specifically, the memory 202 may include a high-speed random access memory, or a nonvolatile memory, for example, one or more disk storage devices, a flash storage device, or another nonvolatile solid-state storage device.

The memory 202 may store an operating system (briefly referred to as a system below), for example, an embedded operating system like uCOS, VxWorks, or RTLinux. The memory 202 may further store a network communication program, and the network communication program may be used to perform communication with one or more other devices.

In this embodiment of this application, the memory 202 may store implementation code of the device-cloud collaborative working method provided in embodiments of this application on the cloud computing node side.

In this embodiment of this application, the processor 201 may be configured to read and execute computer-readable instructions. Specifically, the processor 201 may be configured to invoke a program stored in the memory 202, for example, an implementation program of the device-cloud collaborative working method provided in this application on the cloud computing node side, and execute instructions included in the program.

It should be noted that the cloud computing node shown in FIG. 7 is merely an implementation in embodiments of this application. During actual application, the cloud computing node may further include more or fewer components. This is not limited herein.

In embodiments of this application,
the memory 202 may be configured to store a correspondence between the cloud computing node and the device-side device, that is, store device information of the device-side device 100 allocated to the cloud computing node.

The processor 201 is configured to allocate a storage resource and a computing resource to the device-side device 100, and deploy a runtime for the device-side device 100. The runtime is used to run one or more applications (for example, the first application) that are the same as those in the device-side device 100.

The communication interface 203, the transmitter 205, the receiver 206, the antenna 208, and the like are configured to support communication between the cloud computing node and another device (for example, the device-side device 100, the vendor cloud server 400, and the SP 300), and in particular, communication in collaborative working with the device-side device 100. For a process of communication between the cloud computing node and another device, refer to the detailed descriptions of the foregoing method embodiments.

FIG. 8 is a diagram of a hardware structure of a vendor cloud server 400 according to an embodiment of this application. The vendor cloud server shown in FIG. 8 may be the vendor cloud server 400 in the foregoing communication system 10.

As shown in FIG. 8, the vendor cloud server may include one or more processors 301, a memory 302, a communication interface 303, a transmitter 305, a receiver 306, a coupler 307, and an antenna 308. These components may be connected through a bus 304 or in another manner. In FIG. 8, for example, the components are connected through the bus. In the preceding information:

The communication interface 303 may be used by the vendor cloud server to communicate with another communication device. Specifically, the communication interface 303 may be a 3G communication interface, a long term evolution (LTE) (4G) communication interface, a 5G communication interface, a WLAN communication interface, a WAN communication interface, or the like. Not limited to being provided with a wireless communication interface, the network device 300 may be further provided with a wired communication interface 303 to support wired communication, for example, a backhaul link between the vendor cloud server and another vendor cloud server may be a wired communication connection.

In some embodiments of this application, the transmitter 305 and the receiver 306 may be considered as a wireless modem. The transmitter 305 may be configured to perform transmission processing on a signal output by the processor 301. The receiver 306 is configured to receive a signal. In the vendor cloud server, there may be one or more transmitters 305 and receivers 306. The antenna 308 may be configured to convert electromagnetic energy in a transmission line into an electromagnetic wave in free space, or convert an electromagnetic wave in the free space into electromagnetic energy in the transmission line. The coupler 307 may be configured to split a mobile communication signal into a plurality of signals and distribute the plurality of signals to a plurality of receivers 306. It may be understood that the antenna 308 of the network device may be implemented as a large-scale antenna array.

The memory 302 is coupled to the processor 301, and is configured to store various software programs and/or a plurality of groups of instructions. Specifically, the memory 302 may include a high-speed random access memory, or a nonvolatile memory, for example, one or more disk storage devices, a flash storage device, or another nonvolatile solid-state storage device.

The memory 302 may store an operating system (briefly referred to as a system below), for example, an embedded operating system like uCOS, VxWorks, or RTLinux. The memory 302 may further store a network communication program, and the network communication program may be used to perform communication with one or more other devices.

In this embodiment of this application, the memory 302 may associate and store implementation code of the device-cloud collaborative working method provided in embodiments of this application on the vendor cloud server side.

In this embodiment of this application, the processor 301 may be configured to read and execute computer-readable instructions. Specifically, the processor 301 may be configured to invoke a program stored in the memory 302, for example, an implementation program of the device-cloud collaborative working method provided in this application on the vendor cloud server side, and execute instructions included in the program.

It should be noted that the vendor cloud server shown in FIG. 8 is merely an implementation in embodiments of this application. During actual application, the vendor cloud server may further include more or fewer components. This is not limited herein.

In embodiments of this application,
the memory 302 may be configured to store information (such as a location and application installation information) of each device-side device 100 managed by the vendor cloud server, and information (such as device information and a deployment location) of each cloud computing node managed by the vendor cloud server, and may be further configured to store a correspondence allocation relationship between the cloud computing node and the device-side device. The processor 301 is configured to allocate a cloud computing node to each logged-in device-side device 100. For an allocation strategy and an allocation manner, refer to the detailed descriptions of the foregoing method embodiments.

The communication interface 303, the transmitter 305, the receiver 306, the antenna 308, and the like are configured to support communication between the vendor cloud server and another device (for example, the device-side device 100 or the cloud computing node 200). For a process of communication between the vendor cloud server and another device, refer to the detailed descriptions of the foregoing method embodiments.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

This application further provides an electronic device. The electronic device may include a memory and a processor. The memory may be configured to store a computer program. The processor may be configured to invoke the computer program in the memory, so that the electronic device performs the method performed by the device-side device 100, the cloud computing node 200, or the vendor cloud server 400 in any one of the foregoing embodiments.

This application further provides an electronic device. The electronic device may include a memory and a processor. The memory may be configured to store a computer program. The processor may be configured to invoke the computer program in the memory, so that the electronic device performs the method performed by the device-side device 100, the cloud computing node 200, or the vendor cloud server 400 in any one of the foregoing embodiments.

This application further provides a chip system. The chip system includes at least one processor, configured to implement functions related to the device-side device 100, the cloud computing node 200, or the vendor cloud server 400 in any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product. The computer program product includes a computer program (which may also be referred to as code or instructions). When the computer program is run, a computer is enabled to perform the method performed by the device-side device 100, the cloud computing node 200, or the vendor cloud server 400 in any one of the foregoing embodiments.

This application further provides a computer-readable storage medium. The computer-readable storage medium stores a computer program (which may also be referred to as code or instructions). When the computer program is run, a computer is enabled to perform the method performed by the device-side device 100, the cloud computing node 200, or the vendor cloud server 400 in any one of the foregoing embodiments.

Implementations of this application may be combined at random to implement different technical effect.

All or some of the foregoing embodiments may be implemented by software, hardware, firmware, or any combination thereof. When software is used to implement the methods, all or some of embodiments may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, microwave, or the like) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

A person of ordinary skill in the art may understand that all or some procedures of the methods in embodiments may be implemented by a computer program instructing related hardware. The program may be stored in the computer-readable storage medium. When the program is executed, the procedures in the method embodiments may be performed. The storage medium includes any medium that can store program code, for example, a ROM, a random access memory RAM, a magnetic disk, or a compact disc.

In summary, what is described above is merely embodiments of the technical solutions of this application, but is not intended to limit the protection scope of this application. Any modification, equivalent substitution, improvement, and the like made based on the disclosure of this application shall fall within the protection scope of this application.

## Claims

1. A communication system, wherein the communication system comprises a first device and a first node;
the first device is configured to: start a first application, and send first data to the first node, wherein the first data comprises control data and/or first service data of the first application;
the first node is configured to: allocate first runtime to the first device, start the first application by using the first runtime, receive the first data by using the first application, generate second data based on the first data by using the first application, and return the second data to the first device by using the first application, wherein the second data comprises second service data of the first application; and
the first device is further configured to provide a service based on the second data.

2. The communication system according to claim 1, wherein
the first device is further configured to send a first notification message to the first node after the first application is started, wherein the first notification message comprises an identifier of the first application; and
the first node is specifically configured to start the first application by using the first runtime after receiving the first notification message.

3. The communication system according to claim 1 or 2, wherein
the control data comprises a search instruction, and the second service data comprises a result found by the first node according to the search instruction; or
the first service data comprises an original image photographed by the first device, and the second service data comprises an image obtained after the first node processes the original image; or
the control data comprises a game operation instruction of a user, and the second service data comprises a game picture rendered by the first node according to the game operation instruction.

4. The communication system according to any one of claims 1 to 3, wherein the communication system further comprises a second device;
the second device is configured to: start a second application, and send third data to the first node, wherein the third data comprises control data and/or third service data of the second application;
the first node is further configured to: allocate a second runtime to the second device, start the second application by using the second runtime, receive the third data by using the second application, generate fourth data based on the third data, and return the fourth data to the second device, wherein the fourth data comprises fourth service data of the second application, and the second runtime is different from the first runtime; and
the second device is further configured to provide a service based on the fourth data.

5. The communication system according to any one of claims 1 to 4, wherein the communication system further comprises a vendor cloud server;
the first device is further configured to log in to the vendor cloud server before starting the first application; and
the vendor cloud server is configured to allocate the first node in a plurality of nodes to the first device.

6. The communication system according to claim 5, wherein the first node meets any one of the following:
in the plurality of nodes, the first node is closest to the first device;
the plurality of nodes comprise nodes deployed in an access network, and in the nodes deployed in the access network, the first node is closest to the first device;
the plurality of nodes do not comprise a node deployed in an access network, but comprise nodes deployed in a bearer network, and in the nodes deployed in the bearer network, the first node is closest to the first device;
the plurality of nodes comprise neither a node deployed in an access network nor a node deployed in a bearer network, but comprise nodes deployed in a centralized manner, and in the nodes deployed in the centralized manner, the first node is closest to the first device; or
a distance between the first node and the first device falls within a first value.

7. The communication system according to claim 5 or 6, wherein the communication system further comprises a second node;
the vendor cloud server is further configured to allocate the second node in the plurality of nodes to the first device after a location the first device is moved;
the second node is configured to allocate a third runtime to the first device; and
the first node is further configured to release the first runtime allocated to the first device.

8. The communication system according to claim 7, wherein after the location of the first device is moved, a distance between the first device and the second node is less than the distance between the first device and the first node.

9. The communication system according to any one of claims 1 to 8, wherein
the first node is further configured to: after allocating the first runtime to the first device, install, in the first runtime, a part or all of applications installed in the first device, wherein the part or all of applications comprise the first application.

10. A device-cloud collaborative working method, wherein the method is applied to a first device, and the method comprises:
sending identifiers of a part or all of installed applications to a first node, wherein the part or all of applications comprise a first application, and the identifiers of the part or all of applications are used by the first node to install the part or all of applications in a first runtime allocated to the first device;
starting the first application;
sending first data to the first node, wherein the first data comprises control data and/or first service data of the first application;
receiving second data returned by the first node, wherein the second data is generated by the first node based on the first data by using the first application running on the first node, and the second data comprises second service data of the first application; and
providing a service based on the second data.

11. The method according to claim 10, wherein after starting the first application, the method further comprises:
sending a first notification message to the first node, wherein the first notification message comprises an identifier of the first application, and the identifier of the first application is used by the first node to start the first application by using the first runtime.

12. The method according to claim 10 or 11, wherein
the control data comprises a search instruction, and the second service data comprises a result found by the first node according to the search instruction; or
the first service data comprises an original image photographed by the first device, and the second service data comprises an image obtained after the first node processes the original image; or
the control data comprises a game operation instruction of a user, and the second service data comprises a game picture rendered by the first node according to the game operation instruction.

13. The method according to any one of claims 10 to 12, wherein before starting the first application, the method further comprises:
logging in to a vendor cloud server; and
receiving allocation information sent by the vendor cloud server, wherein the allocation information indicates to allocate the first node to the first device.

14. The method according to claim 13, wherein the first node meets any one of the following:
in a plurality of nodes, the first node is closest to the first device;
the plurality of nodes comprise nodes deployed in an access network, and in the nodes deployed in the access network, the first node is closest to the first device;
the plurality of nodes do not comprise a node deployed in an access network, but comprise nodes deployed in a bearer network, and in the nodes deployed in the bearer network, the first node is closest to the first device;
the plurality of nodes comprise neither a node deployed in an access network nor a node deployed in a bearer network, but comprise nodes deployed in a centralized manner, and in the nodes deployed in the centralized manner, the first node is closest to the first device; or
a distance between the first node and the first device falls within a first value.

15. The method according to claim 13 or 14, wherein the method further comprises:
after a location is moved, receiving new allocation information sent by the vendor cloud server, wherein the new allocation information indicates to allocate a second node to the first device.

16. The method according to claim 15, wherein after the location of the first device is moved, a distance between the first device and the second node is less than the distance between the first device and the first node.

17. The method according to any one of claims 10 to 16, wherein
the second data is specifically generated after the first node communicates with a cloud server by using the first application running in the first runtime, and the cloud server is configured to provide a service for the first application.

18. The method according to claims 10 to 17, wherein
the first runtime comprises any one or more of the following: a basic environment for running application program code, and a runtime library.

19. The method according to any one of claims 10 to 17, wherein
the first application in the first device and the first application in the first node comprise different processing logic.

20. The method according to any one of claims 10 to 19, wherein
the first device comprises a fourth runtime, and the first device is specifically configured to start the first application by using the fourth runtime.

21. A device-cloud collaborative working method, wherein the method is applied to a first node, and the method comprises:
allocating a first runtime to a first device;
starting a first application by using the first runtime;
receiving, by using the first application, first data sent by the first device, wherein the first data comprises control data and/or first service data of the first application in the first device;
generating second data based on the first data by using the first application, wherein the second data comprises second service data of the first application; and
returning the second data to the first device by using the first application.

22. The method according to claim 21, wherein before starting the first application by using the first runtime, the method further comprises:
receiving a first notification message sent by the first node after the first application is started, wherein the first notification message comprises an identifier of the first application.

23. The method according to claim 21 or 22, wherein
the control data comprises a search instruction, and the second service data comprises a result found by the first node according to the search instruction; or
the first service data comprises an original image photographed by the first device, and the second service data comprises an image obtained after the first node processes the original image; or
the control data comprises a game operation instruction of a user, and the second service data comprises a game picture rendered by the first node according to the game operation instruction.

24. The method according to any one of claims 21 to 23, wherein the method further comprises:
allocating a second runtime to a second device, wherein the second runtime is different from the first runtime;
starting a second application by using the second runtime;
receive, by using the second application, third data sent by the second device, wherein the third data comprises control data and/or third service data of the second application in the second device;
generating fourth data based on the third data, wherein the fourth data comprises fourth service data of the second application; and
returning the fourth data to the second device.

25. The method according to any one of claims 21 to 24, wherein before allocating the first runtime to the first device, the method further comprises:
receiving allocation information sent by a vendor cloud server, wherein the allocation information indicates to allocate the first node to the first device.

26. The method according to claim 25, wherein the first node meets any one of the following:
in the plurality of nodes, the first node is closest to the first device;
the plurality of nodes comprise nodes deployed in an access network, and in the nodes deployed in the access network, the first node is closest to the first device;
the plurality of nodes do not comprise a node deployed in an access network, but comprise nodes deployed in a bearer network, and in the nodes deployed in the bearer network, the first node is closest to the first device;
the plurality of nodes comprise neither a node deployed in an access network nor a node deployed in a bearer network, but comprise nodes deployed in a centralized manner, and in the nodes deployed in the centralized manner, the first node is closest to the first device; or
a distance between the first node and the first device falls within a first value.

27. The method according to any one of claims 21 to 26, wherein the method further comprises:
receiving a second notification message sent by the vendor cloud server, wherein the second notification message indicates the first device to release the first runtime allocated to the first device, and the second notification message is sent by the vendor cloud server after the vendor cloud server learns that a location of the first device is moved; and
releasing the first runtime allocated to the first device.

28. The method according to any one of claims 21 to 27, wherein after allocating the first runtime to the first device, the method further comprises:
installing, in the first runtime, a part or all of applications installed in the first device, wherein the part or all of applications comprise the first application.

29. The method according to any one of claims 21 to 28, wherein generating the second data based on the first data specifically comprises:
communicating with a cloud server by using the first application running in the first runtime, to generate the second data based on the first data, wherein the cloud server is configured to provide a service for the first application.

30. An electronic device, comprising a memory and one or more processors, wherein the memory is coupled to the one or more processors, the memory is configured to store computer program code, the computer program code comprises computer instructions, and the one or more processors invoke the computer instructions to enable the electronic device to perform the method according to any one of claims 10 to 20.

31. An electronic device, comprising a memory and one or more processors, wherein the memory is coupled to the one or more processors, the memory is configured to store computer program code, the computer program code comprises computer instructions, and the one or more processors invoke the computer instructions to enable the electronic device to perform the method according to any one of claims 21 to 29.

32. A computer-readable storage medium, comprising instructions, wherein when the instructions are run on an electronic device, the electronic device is enabled to perform the method according to any one of claims 10 to 20 and claims 21 to 29.

33. A chip system, wherein the chip system is applied to an electronic device, the chip system comprises one or more processors, and the processor is configured to invoke computer instructions to perform the method according to any one of claims 10 to 20 and claims 21 to 29.
